Europäisches Patentamt

(19) European Patent Office

Office européen des brevets

(11) Publication number: **0 099 335**
**B1**

(12) # EUROPEAN PATENT SPECIFICATION

(45) Date of publication of the patent specification:
05.02.86

(51) Int. Cl.⁴: **C 09 J 7/02, B 22 C 1/10**

(21) Application number: **83810305.9**

(22) Date of filing: **04.07.83**

(54) **A method of providing a protected layer.**

(30) Priority: **10.07.82 GB 8220118**

(43) Date of publication of application:
**25.01.84 Bulletin 84/4**

(45) Publication of the grant of the patent:
**05.02.86 Bulletin 86/6**

(84) Designated Contracting States:
**BE CH DE FR GB IT LI NL SE**

(56) References cited:
**GB - A - 1 095 478**

(73) Proprietor: **CIBA-GEIGY AG, Klybeckstrasse 141,
CH-4002 Basel (CH)**

(72) Inventor: **Postle, Stephen Roderick, Dr., 4, Normans
Place, Altrincham Cheshire (GB)**
Inventor: **Barber, Roy Patrick, 9, Westbrourne Grove,
Sale Cheshire (GB)**

LIBER, STOCKHOLM 1986

## Description

This invention relates to a method of providing on a glass or plastic surface a protected layer containing particles.

Particulate, preferably pigmented transparent flexible plastics material has found several uses for example as window coverings to reduce glare. However, it is difficult to achieve a wide variety of coloured transparent plastics material because of difficulties associated with dyeing or pigmenting plastics materials especially polyester, dyed polyesters often having very poor light fastness. In general, coated transparent flexible plastics materials wherein the pigment is present in a binder layer coated on the plastics material have not been prepared on a large scale because of their poor scratch resistance, their low humidity resistance and their susceptibility to bacterial and fungal attack. However, binder layers could be advantageous in that a great variety of particulate material can be dispersed therein and the binder then coated on the support. It is known from GB-A-1.095.478, for example, to use a pigmented binder layer in combination with a filmic member containing a fluorescent dye in order to provide light-reflecting assemblies.

Moreover, unless there is a good refractive index match between the binder and the dispersed phase in the binder, highly light scattering coatings are obtained. This results in the coated material having reduced transparency. However, in applications where a high translucence of the coated material is required it would be necessary to achieve a very small particle size for the pigment in the dispersed phase, in the order of $5.10^{-2}$ $\mu$m so that the light scattering effect does not take place in the visible region of the spectrum.

A method has now been found which comprises providing on a glass or plastic surface a protected binder layer containing particles, in which method the above mentioned disadvantages are minimised.

According to the present invention there is provided a method of providing on a glass or plastic surface a protected Binder layer characterised by coating onto a transparent flexible plastics material film support in this order a binder layer containing particles of less than 10 $\mu$m in size, where the refractive index of the binder and the particles therein is essentially the same, and an adhesive layer and adhering said assembly to glass or plastic surface.

Preferably, the transparent flexible plastics material film support is a support used for photographic film materials. Such supports are for example cellulose acetate, cellulose acetate-butyrate and biaxially oriented polyester, polystyrene and polycarbonate.

The binder layer may be a solvent coated layer or, preferably, an aqueous coated layer. Most preferably, the binder is gelatin or a mixture of gelatin and an aqueous latex which is obtained, for example, from copolymerisation of an unsaturated carboxylic acid or carboxylic acid ester and an ethylenically unsaturated compound. Examples of suitable mixtures are gelatin and a latex of a copolymer of butyl acrylate/styrene and also gelatin with a latex of a copolymer of hydroxypropyl acrylate/methylmethacrylate/butyl acrylate.

An example of a binder which is at least partially solvent coatable is polyvinyl alcohol coated from an aqueous alcohol mixture.

Any adhesive may be coated on the binder layer as long as this coating does not affect the underlying binder layer and as long as activation of the adhesive does not affect the binder layer.

Preferably, the adhesive layer is applied from a solvent sytem.

Preferred adhesives are pressure-sensitive adhesives and heatsensitive (or hot melt) adhesives.

The preferred adhesives are pressure-sensitive adhesives. The preferred pressure-sensitive adhesives are acrylates. Examples of suitable adhesives are listed in 'Adhesives Handbook', J. Shields, Butterworths, London 1970. Others are well known to those versed in the art.

Examples of particulate material or particles which may be dispersed in the binder layer are organic pigments for example phthalocyanines, chinacridines, isoindolinones, dioxazines and anthraquinones, inorganic pigments such as oxides of e.g. titanium, zinc, iron, lead, manganese, chromium, cobalt, zinc, antimony and aluminium, sulfides of e.g. mercury, cadmium, antimony and tin, U.V. and I.R. absorbers such as derivatives of triazine, benzotriazole, hydrazone and metal, preferably manganese complexes of ethylene-1,2-dithiolates, nitrosophenols or azo compounds, or derivatives of polymethindyes.

Useful coating thicknessesofthebinder layer are from 1 to 2000 $\mu$m.

Useful coating thicknessesofthe adhesive layer are from 0.2 to 100 $\mu$m.

When the assembly of the present invention is adhered to a glass or plastic surface, the outward facing surface of the assembly is the uncoated sie of the plastics mmaerial filmsupport which exhibits good scratch resistance.

Further bacteria and fungi are inhibited from attacking the binder layer by lack of access to the binder layer. Surprisingly, it has been found, that the inventively used assemblies exhibit an increased transparency which is shown in the accompanying Examples.

**Example 1:** 1 g of an isoindolinone pigment (CI Pigment Yellow 109) having a mean particle dye of 0.69 $\mu$m and a polydispersity of 7, as measured on the Coulter Nanosizer, is dispersed in a mixture of 10 ml water and 0.1 ml of a wetting agent, (adduct obtained from octylphenol and 10 mols of ethylene oxide) using 10 g glass beads in s mixer mill for 1 hour. The formulation is further mixed, after washing it free from the glass beads, with water (80 ml), deionised blend gelatin (5 g), and the wetting agent mentioned (5 ml of 5% solution). The whole is melted out at 40°C for 1 hour. Formaldehyde (5 ml of 1% aqueous solution) is added and the mixture immediately coated onto subbed polyester film support to give a coating (1) of 2.5 mg/dm² of said pigment and 12.5 mg/dm² of gelatin. When the coating has dried and hardened, a portion of it is further coated on the gelatin side, with a solution of a polyvinyl acetate adhesive in five parts of ethyl acetate. The coating is dried, then applied with pressure to a piece of clear glass so that good adhesion is obtained, giving an assembly (II).

The light absorption of the two coatings is measured in a U.V./visible spectrophotometer. Results are shown thus:

**Table 1**

| wavelength of light (nm) | optical density | |
|---|---|---|
| | (I) | (II) |
| 700 | 0.33 | 0.23 |
| 600 | 0.45 | 0.35 |
| 500 | 0.85 | 0.75 |
| 400 | 1.40 | 1.28 |

Visual examination further shows that coating (I) is highly scattering, whilst assembly (II) is highly translucent. Optical microscopical examination of assembly (II) shows that the yellow pigment is still present in the gelatin, and none has dissolved in the adhesive layer.

**Example 2:** An assembly is prepared as shown in Example 1, but using

1 g of a dioxazine pigment (CI Pigment Violet 37) instead of the yellow pigment. The violet pigment has a mean particle size of 0.46μm and a polydispersity of 8. Two assemblies (I) and (II) are prepared as before, and their absorption in a Ü.V./visible spectrophotometer is as shown:

**Table 2**

| wavelength of light (nm) | optical density | |
|---|---|---|
| | (I) | (II) |
| 700 | 0.80 | 0.56 |
| 600 | 1.18 | 1.02 |
| 500 | 1.00 | 0.90 |
| 400 | 0.55 | 0.32 |

Visual examination of assembly (II) shows that it is highly translucent whilst assembly (I) is highly scattering.

**Example 3:** A coating (I) of the dioxazine pigment used in Example 2

is prepared as in Example 2. It is then pressed together with a coating of a polyvinyl acetate adhesive on a paper silicone treated on the side upon which adhesive has been coated. Removal of the silicone paper results in the total transfer of the adhesive from it to the gel coating. This assembly can then be adhered to glass, e.g., just as assembly (II) of Example 2. Objective and subjective measurements on the degree of scatter in this new assembly are identical to those of (II) above. Further, the adhesive-coated assembly can be adhered to glass, torn off and re-adhered a number of times without damage to the assembly, and without leaving adhesive or gelatin fragments on the glass.

**Claims:**

1. A method of providing on a glass or plastic surface a protected binder layer characterised by coating onto a transparent flexible plastics material film support in this order a binder layer containing particles of less than 10 pm in size, where the refractive index of the binder and the particles therein is essentially the same, and an adhesive layer and adhering said assembly to a glass or plastic surface.

2. A method according to claim 1, wherein the film support is cellulose acetate, cellulose acetate-butyrate or biaxially oriented polyester, polystyrene or polycarbonate.

3. A method according to claim 1 or 2, wherein the binder is gelatin or a mixture of gelatin and a copolymer latex or is polyvinyl alcohol.

4. A method according to any one of claims 1 to 3, wherein the adhesive layer is applied from a solvent system.

5. A method accordihg to any one of claims 1 to 4, wherein the adhesive is a pressure-sensitive adhesive or a hot-melt adhesive.

6. A method according to claim 5, wherein the pressure-sensitive adhesive is an acrylic adhesive.

7. A method according to any one of claims 1 to 8, wherein the thickness of the binder layer is from 1 to 2000 µm.

8. A method according to any one of claims 1 to 7, wherein the thickness of the adhesive layer is from 0.2 to 100 µm.

9. A method according to any one of claims 1 to 8, wherein the particulate material is a pigment, a U.V. or an I.R. absorber.

10. An assembly used in the method according to any one of claims 1 to 9.

## Patentansprüche

1. Verfahren zum Aufbringen einer geschützten Bindemittelschicht auf eine Oberfläche aus Glas oder Plastik, dadurch gekennzeichnet, dass man auf einen transparenten, biegsamen Filmträger aus Plastik in dieser Reihenfolge eine Bindemittelschicht, die Teilchen von einer Grösse von weniger als 10 µm enthält, wobei der Brechungsindex des Bindemittels und der Teilchen im wesentlichen derselbe ist, und eine Haftschicht aufbringt, und dieses Material auf eine Oberfläche aus Glas oder Plastik klebt.

2. Verfahren nach Anspruch 1, dadurch gekennzeichnet, dass der Filmträger aus Celluloseacetat, Celluloseacetatbutyrat oder biaxial orientiertem Polyester, Polystyrol oder Polycarbonat besteht.

3. Verfahren nach Anspruch 1 oder 2, dadurch gekennzeichnet, dass das Bindemittel Gelatine oder eine Mischung von Gelatine und einem Copolymerlatex oder Polyvinylalkohol ist.

4. Verfahren nach einem der Ansprüche 1 bis 3, dadurch gekennzeichnet, dass die Haftschicht aus einem Lösungsmittel aufgebracht wird.

5. Verfahren nach einem der Ansprüche 1 bis.4, dadurch gekennzeichnet, dass das Haftmittel ein Haftkleber oder ein Schmelzkleber ist.

6. Verfahren nach Anspruch 5, dadurch gekennzeichnet, dass der Haftkleber ein Acrylkleber ist.

7. Verfahren nach einem der Ansprüche 1 bis 6, dadurch gekennzeichnet, dass die Dicke der Bindemittelschicht 1 bis 2000 µm beträgt.

8. Verfahren nach einem der Ansprüche 1 bis 7, dadurch gekennzeichnet, dass die Dicke der Haftschicht 0,2 bis 100 µm beträgt.

9. Verfahren nach einem der Ansprüche 1 bis 8, dadurch gekennzeichnet, dass die Teilchen ein Pigment, ein UV- oder IR-Absorber sind.

10. Das im Verfahren nach einem der Ansprüche 1 bis 9 verwendete Material.

## Revendications

1. Procédé pour munir une surface de verre ou de plastique d'une couche de liant protégée, caractérisé en ce qu'on applique sur un support de pellicule de matière plastique souple transparente, dans cet ordre, une couche de liant contenant des particules de taille inférieure à 10 µm, dans laquelle l'indice de réfraction du liant et des particules qui s'y trouvent est pratiquement le mème, et une couche d'adhésif, et en ce qu'on colle cet assemblage sur une surface de verre ou de plastique.

2. Procédé suivant la revendication 1, dans lequel le support de pellicule est l'acétate de cellulose, l'acétate-butyrate de cellulose ou un polyester biaxiallement orienté, du polystyrène ou du polycarbonate.

3. Procédé suivant les revendications 1 ou 2, dans lequel le liant est de la gélatine ou un mélange de gélatine et d'un latex de copolymère ou est l'alcool polyvinylique.

4. Procédé suivant l'une quelconque des revendications 1 à 3, dans lequel la couche d'adhésif est appliquée à partir d'un système de solvant.

5. Procédé suivant l'une quelconque des revendications 1 à 4, dans lequel l'adhésif est un adhésif sensible à la pression ou un adhésif hot melt.

6. Procédé suivant la revendication 5, dans lequel l'adhésif sensible à la pression-est un adhésif acrylique.

7. Procédé suivant l'une quelconque des revendications 1 à 6, dans lequel l'épaisseur de la couche de liant est de 1 à 2.000 µm.

8. Procédé suivant l'une quelconque des revendications 1 à 7, dans lequel l'épaisseur de la couche adhésive est de 0,2 à 100 µm.

9. Procédé suivant l'une quelconque des revendications 1 à 8, dans lequel la matière particulaire est un pigment, ou un absorbant UV ou IR.

10. Assemblage utilisé dans le procédé suivant l'une quelconque des revendications 1 à 9.